# NEUE EUROPÄISCHE PATENTSCHRIFT

(11) **EP 2 292 958 B2**
(45) Veröffentlichungstag und Bekanntmachung des Hinweises auf die Entscheidung über den Einspruch: **08.09.2021**
(45) Hinweis auf die Patenterteilung: 08.05.2013
(21) Anmeldenummer: 10008949.9
(22) Anmeldetag: 27.08.2010
(51) Int. Cl.: F16K 37/00, F16K 31/60, F16K 31/05, F16K 31/08

(54) **Manuell betätigbares Ansteuermodul**
Manually operated control module
Module de commande pouvant être actionné manuellement

(30) Priorität: 08.09.2009 DE 202009012183 U
(43) Veröffentlichungstag der Anmeldung: 09.03.2011
(73) Patentinhaber: Bürkert Werke GmbH & Co. KG, 74653 Ingelfingen (DE)
(72) Erfinder: Bachmann, René, 01454 Grosserkmannsdorf (DE); Brinkmann, Ulrike, 01454 Grosserkmannsdorf (DE); Grosse, Kersten, 01445 Radebeul (DE)
(74) Vertreter: Prinz & Partner mbB

(56) Entgegenhaltungen:
- EP-A2- 1 643 175
- EP-B1- 0 036 293
- WO-A1-02/093058
- WO-A1-2004/099657
- DE-A1- 2 221 598
- DE-A1- 3 311 743
- DE-A1- 10 054 740
- DE-B- 1 005 882
- DE-B- 1 012 235
- DE-B3-102007 030 405
- DE-C- 952 404
- DE-C1- 4 213 508
- DE-C2- 3 220 940
- DE-U- 1 710 321
- DE-U- 1 822 068
- DE-U- 1 903 932
- DE-U- 6 600 559
- DE-U1- 8 235 959
- FR-A1- 2 812 926
- US-A- 5 706 007
- US-B1- 7 460 013

## Beschreibung

Die Erfindung betrifft ein Ventilansteuerungssystem mit einer Ventilansteuerungsvorrichtung und einem Handbetätigungsgerät zum Auslösen von Bedienungshandlungen in der Ventilansteuerungsvorrichtung.

Bekannte Lösungen im Bereich der Ventilansteuerungen erfordern entweder mechanische Betätigungen von Hand im Inneren der Ventilansteuerungsvorrichtung oder aufwendige leitungsgebundene bzw. drahtlose Datenübertragungstechniken (bekannt sind in diesem Bereich insbesondere Funk und Infrarot), oder sie basieren auf traditionellen Bedienmöglichkeiten wie z. B. die Betätigung von Tasten, die durch eine Frontfolie abgedeckt sind.

Das Öffnen eines Gehäuses bzw. das Abnehmen eines Gehäuseteils, um an das Innere einer Ventilansteuerungsvorrichtung zu gelangen, ist umständlich und zeitaufwendig. Leitungsgebundene Techniken sind bei den typischerweise verlangten hohen Schutzanforderungen teuer. Auch die drahtlose Datenübertragung, z. B. über Modems, ist für die meisten Anwendungen zu kostspielig. Die Bedienung über Tasten wird nicht immer als komfortabel empfunden und erfordert verlässliche und damit teure Bedienfelder.

Dokument US 7460013 offenbart ein Ventilansteuerungssystem mit einem Handbetätigungsgerät. Aus DE 33 11 743 A1 ist ein Ventilansteuerungssystem mit den Merkmalen des Oberbegriffs des Anspruchs 1 bekannt.

Aufgabe der Erfindung ist es, eine zuverlässige und komfortable Bedienung einer Ventilansteuerungsvorrichtung zu ermöglichen.

Die Aufgabe wird durch ein Ventilansteuerungssystem mit den Merkmalen des Anspruchs 1 gelöst. Vorteilhafte und zweckmäßige Ausgestaltungen des erfindungsgemäßen Ventilansteuerungssystems sind in den Unteransprüchen angegeben.

Das erfindungsgemäße Ventilansteuerungssystem umfasst eine Ventilansteuerungsvorrichtung und ein Handbetätigungsgerät zum Auslösen von Bedienungshandlungen in der Ventilansteuerungsvorrichtung. Das Handbetätigungsgerät weist eine Magnetanordnung auf, und die Ventilansteuerungsvorrichtung weist eine auf die Magnetanordnung des Handbetätigungsgeräts abgestimmte Magnetfeldsensoranordnung auf.

Unter einer auf die Magnetanordnung des Handbetätigungsgeräts abgestimmten Magnetfeldsensoranordnung ist hier eine Sensoranordnung zu verstehen, die ein von der Magnetanordnung erzeugtes Magnetfeld registrieren kann, wenn sich die Magnetanordnung in der Nähe der Magnetfeldsensoranordnung befindet.

Das erfindungsgemäße Ventilansteuerungssystem ermöglicht eine sichere Auslösung von Bedienungshandlungen in der Ventilansteuerungsvorrichtung. Ein Öffnen des Gehäuses der Ventilansteuerungsvorrichtung ist ebenso wenig notwendig wie eine Verkabelung, Steckverbindungen oder Schnittstellen für eine drahtlose Datenübertragung. Außerdem ist die erfindungsgemäße Technik praktisch verschleißfrei, da die Auslösung von Bedienungshandlungen berührungslos erfolgt. Die Handhabung ist sehr komfortabel, da keine Tasten gedrückt werden müssen; es muss nur das Handbetätigungsgerät in die Nähe der Ventilansteuerungsvorrichtung gebracht und ggf. bewegt werden. Bei der Realisierung der Magnetfeldanordnung und der zugehörigen Magnetfeldsensoranordnung kann weitestgehend auf Standardkomponenten zurückgegriffen werden, sodass die erfindungsgemäße Lösung im Vergleich zu anderen Techniken kostengünstig ist.

Die Magnetfeldsensoranordnung der Ventilansteuerungsvorrichtung ist gemäß der Erfindung so ausgelegt, dass sie empfindlich für die Feldstärke und/oder die Feldrichtung des von der Magnetanordnung erzeugten Magnetfelds ist.

Gemäß der Erfindung weist die Magnetfeldsensoranordnung wenigstens zwei Sensoren und/oder die Magnetanordnung wenigstens zwei Permanentmagnete auf. Die Verwendung von zwei oder mehr Sensoren bzw. Magneten ermöglicht es, mehrere Stellungen bzw. Bewegungen des Handbetätigungsgeräts zu unterscheiden und unterschiedlichen Befehlen zuzuordnen. Neben dieser Codiermöglichkeit von Bedienungshandlungen verhindert die Mehrzahl an Sensoren bzw. Magneten auch potenzielle Fehlbedienungen. Aufgrund des lokal sehr begrenzten Profils der gerichteten Feldstärken ist die Wahrscheinlichkeit des Auftretens gleichgearteter Störfelder gegenüber der Verwendung nur eines Sensors bzw. Magneten deutlich reduziert.

Für die Unterscheidung der verschiedenen Stellungen bzw. Bewegungen des Handbetätigungsgeräts ist es zweckmäßig, dass die Magnetfeldsensoranordnung in Abhängigkeit von der Orientierung und/oder Bewegung der Magnetanordnung relativ zur Magnetfeldsensoranordnung charakteristische Signale erzeugt.

Die Signale können dann unterschiedlichen Befehlen zugeordnet sein, die z. B. in einem Speicher einer elektronischen Steuerung hinterlegt sind. Damit sind auf einfache Weise die Voraussetzungen dafür erfüllt, dass die Erzeugung unterschiedlicher charakteristischer Magnetfelder bzw. Magnetfeldänderungen in der Ventilansteuerungsvorrichtung erkannt werden und zur Auslösung der jeweils gewünschten Bedienungshandlung führt.

Eine Weiterbildung der Erfindung sieht vor, dass die Magnetanordnung wenigstens einen Elektromagneten aufweist. Der bzw. die Elektromagnete können alternativ oder zusätzlich zu einem oder mehreren Permanentmagneten vorgesehen sein. Die Verwendung von Elektromagneten eröffnet ein weites Spektrum an Bedienungs- und Steuerungsmöglichkeiten.

So kann eine Ansteuerung für den Elektromagneten, mit der die Bestromung des Elektromagneten (ein/aus, ggf. auch Variation der Stromstärke) und/oder die Stromflussrichtung (Einstellung der Polarität des Elektromagneten) veränderbar sind, zur Erzeugung vieler unterschiedlicher Magnetfelder genutzt werden.

Besonders vorteilhaft ist hierbei eine zeitlich variable Ansteuerung. Mit einer solchen Ansteuerung können mit nur einem Elektromagneten vorher festgelegte Abfolgen von Magnetfeldern/änderungen erzeugt werden. Die Magnetfeldsensoranordnung erkennt die Profile, die bestimmten Befehlen zugeordnet sind.

Gemäß einer Weiterführung dieses Aspekts ist eine solche zeitlich variable Ansteuerung Teil einer Einrichtung zur Übertragung von Daten in die Ventilansteuerungsvorrichtung.

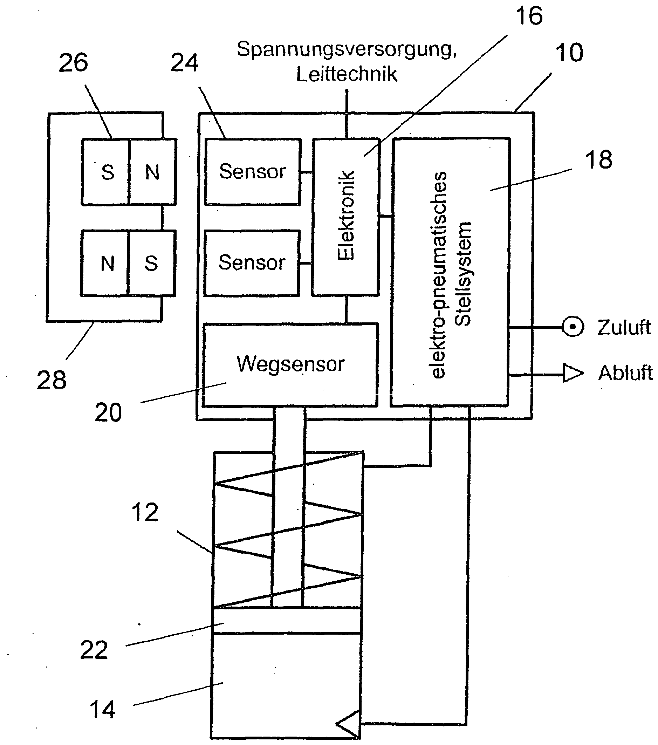

Die Erfindung wird nachfolgend anhand einer bevorzugten Ausführungsform unter Bezugnahme auf die beigefügte Zeichnung im Detail beschrieben. In der Zeichnung zeigt die einzige Figur eine schematische Darstellung eines erfindungsgemäßen Ventilansteuerungssystems.

In der Figur ist beispielhaft eine Ventilansteuerungsvorrichtung 10 zur Ansteuerung eines pneumatischen Antriebs 12 mit einem Pneumatikzylinder 14 für ein Prozessventil dargestellt. Typische Komponenten einer solchen Ventilansteuerungsvorrichtung 10 sind eine zentrale Elektronik 16, ein elektro-pneumatisches Stellsystem 18 und ein Wegsensor 20 zur Bestimmung der Position eines im Pneumatikzylinder 14 beweglichen Kolbens 22.

Die Erfindung ist aber nicht auf diesen Typ von Ventilansteuerungsvorrichtungen beschränkt, sondern erstreckt sich auf alle Arten von Ventilansteuerungsvorrichtungen, die zu bestimmten Gelegenheiten Bedienungshandlungen erfordern.

Des Weiteren umfasst die Ventilansteuerungsvorrichtung 10 eine Magnetfeldsensoranordnung 24 mit zwei oder mehr Sensoren, die eine Veränderung der Feldstärke und/oder der Feldrichtung eines in der Nähe befindlichen Magnetfelds registrieren können und entsprechende Signale ausgeben. Für diesen Zweck geeignete Sensoren sind z. B. Hall-Sensoren.

Die Magnetfeldsensoranordnung 24 ist vor äußeren (mechanischen) Einflüssen durch ein Kunststoffgehäuse geschützt, in dem auch die anderen Komponenten der Ventilansteuerungsvorrichtung 10 untergebracht sind. Der Kunststoff beeinträchtigt die Empfindlichkeit der Magnetfeldsensoranordnung 24 nicht wesentlich.

Die Magnetfeldsensoranordnung 24 der Ventilansteuerungsvorrichtung 10 ist abgestimmt auf eine Magnetanordnung 26 eines Handbetätigungsgeräts 28, das zusammen mit der Ventilansteuerungsvorrichtung 10 ein Ventilansteuerungssystem bildet. Die Magnetanordnung 26 ist in einem Kunststoffgehäuse des Handbetätigungsgeräts 28 aufgenommen und weist zwei oder mehr starke Permanentmagnete auf.

Die Magnetanordnung 26 und die Magnetfeldsensoranordnung 24 sind aufeinander abgestimmt im Hinblick auf die Magnetfeldstärke und die Sensorempfindlichkeit sowie auf die geometrische Anordnung der Permanentmagnete und der Sensoren. Der Einfluss von Störfeldern ist somit nahezu ausgeschlossen.

Im Folgenden wird die Funktionsweise des Ventilansteuerungssystems erläutert. Mithilfe des Handbetätigungsgeräts 28 können Bedienungshandlungen in der Ventilansteuerungsvorrichtung 10 ausgelöst werden. Dazu wird das Handbetätigungsgerät 28 mit der Magnetanordnung 26 nahe an die Magnetfeldsensoranordnung 24 herangeführt, wie in der Figur gezeigt, sodass die Sensoren der Magnetfeldsensoranordnung 24 die Präsenz und/oder die Veränderung der von den Permanentmagneten der Magnetanordnung 26 erzeugten Magnetfelder (Feldstärke und Feldrichtung) registrieren können.

Je nach Orientierung bzw. Bewegung (insbesondere Bewegungsrichtung) der Permanentmagnete der Magnetanordnung 26 relativ zu den Sensoren der Magnetfeldsensoranordnung 24 erzeugt die Magnetfeldsensoranordnung 24 ein für die jeweilige Orientierung und/oder Bewegung charakteristisches Signal. Auf diese Weise lassen sich mit dem Handbetätigungsgerät 28 in der Ventilansteuerungsvorrichtung 10 berührungslos verschiedene Signale erzeugen, die unterschiedlichen, in der Elektronik 16 definierten Befehlen zugeordnet sind (Codierung). Die Befehle stellen Auslöser entsprechender Bedienungshandlungen in der Ventilansteuerungsvorrichtung 10 dar.

Die Magnetanordnung 26 kann auch einen oder mehrere besonders geformte Permanentmagnete aufweisen. Unter "besonders geformt" sind dabei Formen zu verstehen, die von der typischen linearen Grundform eines Permanentmagneten (Stabmagnet) abweichen.

Die Anzahl der unterscheidbaren Signale bzw. Befehle variiert allgemein mit der Anzahl der vorhandenen Magnete und Sensoren und deren Anordnung.

Anstelle von Permanentmagneten können auch ein oder mehrere Elektromagnete vorgesehen sein. Eine Ansteuerung der Elektromagnete, mit der die Bestromung und/oder Stromflussrichtung (und damit die Polarität des Elektromagneten bzw. der Elektromagnete) verändert werden können, erhöht die Anzahl der möglichen Befehlscodes. Durch eine geeignete zeitliche Variation der Ansteuerung können auch größere Datenmengen kabel- und berührungslos sequenziell in die Ventilansteuerungsvorrichtung 10 übertragen werden.

## Patentansprüche

1. Ventilansteuerungssystem mit
einer Ventilansteuerungsvorrichtung (10), und
einem Handbetätigungsgerät (28) zum Auslösen von Bedienungshandlungen in der Ventilansteuerungsvorrichtung (10),
wobei das Handbetätigungsgerät (28) eine Magnetanordnung (26) aufweist, und
die Ventilansteuerungsvorrichtung (10) eine Magnetfeldsensoranordnung (24) aufweist,
wobei die Magnetfeldsensoranordnung (24) empfindlich für die Feldstärke und/oder die Feldrichtung des von der Magnetanordnung (26) erzeugten Magnetfelds ist,
**dadurch gekennzeichnet, dass**
die Magnetfeldsensoranordnung (24) wenigstens zwei Sensoren und/ oder die Magnetanordnung (26) wenigstens zwei Permanentmagnete aufweist,
wobei die Magnetanordnung (26) des Handbetätigungsgeräts (28) und die Magnetfeldsensoranordnung (24) der Ventilansteuerungsvorrichtung (10) aufeinander abgestimmt sind im Hinblick auf die Magnetfeldstärke und die Sensorempfindlichkeit sowie auf die geometrische Anordnung der Permanentmagnete und der Sensoren.

2. Ventilansteuerungssystem nach Anspruch 1, **dadurch gekennzeichnet, dass** die Magnetfeldsensoranordnung (24) in Abhängigkeit von der Orientierung und/oder Bewegung der Magnetanordnung (26) relativ zur Magnetfeldsensoranordnung (24) charakteristische Signale erzeugt.

3. Ventilansteuerungssystem nach Anspruch 2, **dadurch gekennzeichnet, dass** die Signale unterschiedlichen Befehlen zugeordnet sind.

4. Ventilansteuerungssystem nach einem der vorhergehenden Ansprüche, **dadurch gekennzeichnet, dass** die Magnetanordnung (26) wenigstens einen Elektromagneten aufweist.

5. Ventilansteuerungssystem nach Anspruch 4, **gekennzeichnet durch** eine Ansteuerung für den Elektromagneten, mit der die Bestromung des Elektromagneten und/oder die Stromflussrichtung veränderbar sind.

6. Ventilansteuerungssystem nach Anspruch 5, **dadurch gekennzeichnet, dass** die Ansteuerung zeitlich variabel ist.

7. Ventilansteuerungssystem nach Anspruch 6, **dadurch gekennzeichnet, dass** die Ansteuerung Teil einer Einrichtung zur Übertragung von Daten in die Ventilansteuerungsvorrichtung (10) ist.

## Claims

1. A valve drive system comprising
a valve drive device (10), and
a hand-operated apparatus (28) for triggering operating actions in the valve drive device (10),
the hand-operated apparatus (28) including a magnet arrangement (26), and
the valve drive device (10) including a magnetic field sensor arrangement (24),
the magnetic field sensor arrangement (24) being sensitive to the field strength and/or the field direction of the magnetic field generated by the magnet arrangement (26),
**characterized in that**
the magnetic field sensor arrangement (24) includes at least two sensors and/or the magnet arrangement (26) includes at least two permanent magnets,
the magnet arrangement (26) of the hand-operated apparatus (28) and the magnetic field sensor arrangement (24) of the valve drive device (10) being adjusted to each other with regard to the magnetic field strength and the sensor sensitivity and also the geometric arrangement of the permanent magnets and the sensors.

2. The valve drive system according to claim 1, **characterized in that** the magnetic field sensor arrangement (24) generates characteristic signals as a function of the orientation and/or movement of the magnet arrangement (26) relative to the magnetic field sensor arrangement (24).

3. The valve drive system according to claim 2, **characterized in that** the signals are assigned to different commands.

4. The valve drive system according to any of the preceding claims, **characterized in that** the magnet arrangement (26) includes at least one solenoid.

5. The valve drive system according to claim 4, **characterized by** a drive for the solenoid by means of which the energization of the solenoid and/or the current flow direction are variable.

6. The valve drive system according to claim 5, **characterized in that** the drive is time-variable.

7. The valve drive system according to claim 6, **characterized in that** the drive is part of a means for transferring data into the valve drive device (10).

## Revendications

1. Système de commande de valve, comportant :
un dispositif de commande de valve (10), et
un appareil d'actionnement manuel (28) pour le déclenchement d'actions d'utilisation dans le dispositif de commande de valve (10),
l'appareil d'actionnement manuel (28) présentant un agencement d'aimants (26), et
le dispositif de commande de valve (10) présentant un agencement (24) de capteurs de champ magnétique,
l'agencement (24) de capteurs de champ magnétique étant sensible à l'intensité de champ et/ou au sens de champ du champ magnétique produit par l'agencement d'aimants (26),
**caractérisé en ce que**
l'agencement (24) de capteurs de champ magnétique présente au moins deux capteurs et/ou l'agencement d'aimants (26) présente au moins deux aimants permanents,
l'agencement d'aimants (26) de l'appareil d'actionnement manuel (28) et l'agencement (24) de capteurs de champ magnétique du dispositif de commande de valve (10) sont adaptés l'un à l'autre quant à l'intensité de champ magnétique et la sensibilité du capteur et l'agencement géométrique des aimants permanents et des capteurs.

2. Système de commande de valve selon la revendication 1, **caractérisé en ce que** l'agencement (24) de capteurs de champ magnétique produit des signaux caractéristiques en fonction de l'orientation et/ou du déplacement de l'agencement d'aimants (26) par rapport à l'agencement (24) de capteurs de champ magnétique.

3. Système de commande de valve selon la revendication 2, **caractérisé en ce que** les signaux sont associés à différentes instructions.

4. Système de commande de valve selon l'une des revendications précédentes, **caractérisé en ce que** l'agencement d'aimants (26) présente au moins un électro-aimant.

5. Système de commande de valve selon la revendication 4, **caractérisé par** une commande pour l'électro-aimant au moyen de laquelle l'alimentation en courant de l'électro-aimant et/ou le sens du flux de courant peuvent être modifiés.

6. Système de commande de valve selon la revendication 5, **caractérisé en ce que** la commande est variable dans le temps.

7. Système de commande de valve selon la revendication 6, **caractérisé en ce que** la commande fait partie d'un moyen de transmission de données vers le dispositif de commande de valve (10).
